# FASCICULE DE BREVET EUROPEEN

(11) **EP 3 083 288 B1**
(45) Date de publication et mention de la délivrance du brevet: **16.05.2018**
(21) Numéro de dépôt: 14814853.9
(22) Date de dépôt: 17.12.2014
(51) Int. Cl.: B60C 15/02, B60C 5/16, B60B 21/12

(54) **ADAPTATEUR POUR ENSEMBLE ROULANT ET ENSEMBLE ROULANT LE COMPRENANT**
ADAPTER FÜR EINE WALZENANORDNUNG UND WALZENANORDNUNG DAMIT
ADAPTER FOR ROLLING ASSEMBLY AND ROLLING ASSEMBLY COMPRISING SAME

(30) Priorité: 19.12.2013 FR 1362970
(43) Date de publication de la demande: 26.10.2016
(73) Titulaire: Compagnie Générale des Etablissements Michelin, 63000 Clermont-Ferrand (FR)
(72) Inventeur: AHOUANTO, Michel, F-63040 Clermont-Ferrand Cedex 9 (FR); PINEAU, Jacky, F-63040 Clermont-Ferrand Cedex 9 (FR); TOPIN, Arthur, F-63040 Clermont-Ferrand Cedex 9 (FR); BESTGEN, Luc, F-63040 Clermont-Ferrand Cedex 9 (FR)
(74) Mandataire: Bauvir, Jacques
(86) Numéro de dépôt international: PCT/EP2014/078176
(87) Numéro de publication internationale: WO 2015/091620

(56) Documents cités:
- WO-A1-00/78565
- WO-A1-92/01576
- FR-A1- 2 491 836

## Description

L'invention concerne un adaptateur pour ensemble roulant formé principalement d'un pneumatique et d'une jante, et un ensemble roulant comprenant ledit adaptateur.

On rappelle ci-après les définitions utilisées dans la présente invention :
- « direction axiale » : direction parallèle à l'axe de rotation du pneumatique,
- « direction radiale » : direction coupant l'axe de rotation du pneumatique et perpendiculaire à celui-ci,
- « direction circonférentielle » : direction perpendiculaire à un rayon et comprise dans un plan perpendiculaire à l'axe de rotation du pneumatique,
- « coupe radiale » : coupe selon un plan qui contient l'axe de rotation du pneumatique,
- « plan équatorial » : plan perpendiculaire à l'axe de rotation et qui passe par le milieu de la bande de roulement

Dans la demande WO00/78565 il est déjà connu d'insérer, entre la jante et les bourrelets d'un pneumatique, un adaptateur élastique. Cet adaptateur est déformable élastiquement, dans les directions radiale et axiale. Un tel adaptateur permet de dissocier la partie de l'ensemble roulant pouvant être considérée comme travaillant réellement comme un pneumatique, de la partie de l'ensemble roulant pouvant être considérée comme travaillant comme une jante.

Mais si un tel ensemble permet également d'assurer les fonctions d'un pneumatique classique, et notamment une réponse en poussée de dérive du pneumatique suivant l'application d'un angle de dérive au pneumatique qui permet ainsi à l'ensemble une flexibilité suffisante pour lui éviter toute dégradation de surface ou en profondeur, il n'assure toutefois pas parfaitement une déformabilité suffisante du pneumatique lors de chocs sur des bordures de trottoirs ou des trous dans la chaussée, tels que des nids de poule.

En effet, l'ensemble monté avec l'adaptateur de l'état de la technique ne permet pas d'obtenir une déformation locale dans la zone de l'aire de contact. L'enseignement de ce document présente en outre l'inconvénient de ne pas permettre d'obtenir aisément des modes de réalisation de l'adaptateur offrant une capacité importante à absorber les grandes déformations lors de passage dans des nids de poule sans déformations plastiques résiduelles.

Il est encore connu du document FR 2,491,836A1 un adaptateur disposé entre le bourrelet d'un pneumatique et une jante destiné à résoudre les problèmes de montage et de démontage d'un pneumatique et d'une jante. Cet adaptateur comprend principalement deux tringles annulaires espacées l'une de l'autre et montées à l'intérieur d'un corps annulaire comprenant une nappe. Les tringles sont reliées par un câblé qui, par ailleurs, les entoure.

Aucune suggestion n'est donnée dans ces documents sur des adaptations d'architecture qui aboutiraient à une déformation du renfort extérieur localisée dans la zone de l'aire de contact conduisant à une contre-flèche réduite et rendant ainsi l'ensemble monté moins intrusif vis-à-vis du véhicule.

Aussi il subsiste le besoin de disposer d'un nouvel adaptateur qui assure une meilleure protection du pneumatique lors de chocs sur le pneumatique dus à une utilisation sur des routes en mauvais état, minimisant ainsi au maximum l'endommagement partiel, voire total, de sa structure interne, tout en maintenant à un haut niveau les performances de tenue de route du pneumatique, en particulier son aptitude à développer d'importantes poussées de dérive. En outre, pour le moins, en cas d'endommagement dû à une utilisation anormalement sévère, il s'agit de mettre en sécurité le véhicule par son déplacement sur une courte distance suite à un choc destructeur pour l'ensemble.

L'invention a donc pour objet un adaptateur pour ensemble roulant ayant un axe de rotation et comprenant :
- un pneumatique ayant deux bourrelets, et
- une jante,
ledit adaptateur assurant la jonction entre l'un des bourrelets et la jante, ladite jante ayant deux sièges de jante,
ledit adaptateur ayant :
- une extrémité axialement intérieure destinée à être monté sur le siège de la jante et comprenant un élément de renfort intérieur,
- une extrémité axialement extérieure comprenant un élément de renfort extérieur,
- un corps connectant ladite extrémité extérieure avec ladite extrémité intérieure de manière à former une pièce unitaire et comprenant au moins une armature de renforcement principale assurant la liaison entre ledit renfort extérieur et ledit renfort intérieur,
- un siège d'adaptateur sensiblement cylindrique destiné à recevoir l'un desdits bourrelets, ledit siège étant situé à l'extrémité axialement extérieure dudit corps,
- une face d'appui d'adaptateur sensiblement comprise dans un plan perpendiculaire à l'axe de rotation, ladite face d'appui étant située sur la face axialement intérieure de l'extrémité axialement extérieure.

L'adaptateur se caractérise en ce que le renfort de l'extrémité axialement extérieur est en totalité à l'extérieur de la face d'appui, et en ce que le corps comprend, en regard du siège d'adaptateur, un renfort annulaire de siège présentant un module de compression supérieur ou égal à 1GPa.

L'adaptateur selon l'invention présente l'avantage d'être de constitution et de montage simples. L'adaptateur selon l'invention permet par ailleurs, de par l'augmentation du serrage sous les bourrelets du pneumatique, d'en empêcher sa rotation sur l'adaptateur en forte sollicitation latérale.

Enfin l'adaptateur selon l'invention présente l'avantage de diminuer de manière significative le niveau des efforts mécaniques vers le châssis lors d'un choc, et de permettre ainsi d'alléger la caisse du véhicule.

Un autre objet de l'invention est un ensemble roulant ayant un axe de rotation et comprenant :
- un pneumatique ayant deux bourrelets,
- une jante,
- ledit adaptateur assurant la jonction entre l'un des bourrelets et la jante ladite jante ayant deux sièges de jante,
ledit adaptateur ayant :
- une extrémité axialement intérieure destinée à être monté sur le siège de la jante et comprenant un élément de renfort intérieur,
- une extrémité axialement extérieure comprenant un élément de renfort extérieur,
- un corps connectant ladite extrémité extérieure avec ladite extrémité intérieure de manière à former une pièce unitaire et comprenant au moins une armature de renforcement principale assurant la liaison entre ledit renfort extérieur et ledit renfort intérieur,
- un siège d'adaptateur sensiblement cylindrique destiné à recevoir l'un desdits bourrelets, ledit siège étant situé à l'extrémité axialement extérieure dudit corps,
- une face d'appui d'adaptateur sensiblement comprise dans un plan perpendiculaire à l'axe de rotation, ladite face d'appui étant située sur la face axialement intérieure de l'extrémité axialement extérieure.

Cet ensemble roulant se caractérise en ce que l'élément de renfort de l'extrémité axialement extérieure est en totalité située axialement à l'extérieur de la face d'appui, et en ce que le corps comprend en regard du siège d'adaptateur un renfort annulaire de siège présentant un module de compression supérieur ou égal à 1 GPa.

L'adaptateur permet à un ensemble roulant d'avoir des déformations radiales suffisantes entre le bourrelet du pneumatique et la jante, lors de son usage et lorsqu'il est gonflé à une pression nominale, pour permettre la protection souhaitée vis-à-vis des chocs latéraux.

L'extrémité axialement extérieure de l'adaptateur délimite, axialement, un « logement destiné à recevoir le bourrelet du pneumatique ». La face d'appui de l'extrémité axialement extérieure sert d'appui, dans le sens axial, au bourrelet du pneumatique à l'instar d'un crochet de jante.

Ainsi le logement reçoit le bourrelet du pneumatique tout comme le fait classiquement le siège d'une jante. Le pneumatique est alors immobilisé axialement par la pression de gonflage, et est plaqué contre la face d'appui de cette extrémité axialement extérieure, à l'instar de ce qui est fait classiquement pour le bourrelet d'un pneumatique contre le crochet de jante d'une jante.

L'extrémité axialement intérieure de l'adaptateur pourrait être dénommée « bourrelet d'adaptateur » puisqu'elle est destinée à accrocher l'adaptateur sur le crochet de jante d'une jante à l'instar de ce qui est fait classiquement par le bourrelet d'un pneumatique.

Ainsi, en fonctionnement de l'ensemble roulant selon l'invention et aux sollicitations de service pour lesquelles il est conçu, le pneumatique est immobilisé axialement par rapport à la jante, plus précisément les bourrelets du pneumatique sont immobilisés axialement par rapport à la jante de la même façon que pour un ensemble roulant classique dans lequel les bourrelets du pneumatique sont montés directement sur les sièges d'une jante, alors que les bourrelets du pneumatique ne sont pas immobilisés radialement par rapport à la jante, plus précisément les bourrelets du pneumatique sont capables d'un degré de déplacement radialement par rapport à la jante. En roulage standard, on peut dire qu'il n'y a quasiment pas de déformation axiale de l'adaptateur, ou alors elle est négligeable par rapport à la déformation radiale.

En revanche, lors d'un choc, la déformation axiale de l'adaptateur peut être importante, contribuant ainsi à réduire les contraintes sur l'ensemble monté.

De préférence, le renfort annulaire de siège présente un module de compression supérieur ou égal à 4GPa, et plus préférentiellement supérieur ou égal à 10GPa. Le renfort annulaire peut être constitué d'une âme entourée d'un élastomère, ou d'une succession de couches de composés élastomères et de renforts métalliques et/ou textiles disposés selon toutes les combinaisons possibles. L'âme peut comprendre au moins un élément choisi parmi un métal, un matériau composite, un thermoplastique et leur mélange. Le matériau composite put être réalisé à base de fibres de verre noyées dans une matrice de résine.

Parmi les élastomères pouvant être utilisés, on liste, en premier lieu, les caoutchoucs réticulables par des réactions chimiques de vulcanisation par des ponts soufre, par des liaisons carbone-carbone créées par l'action de peroxydes ou de rayonnements ionisants, par d'autres chaînes d'atomes spécifiques de la molécule de l'élastomère, en second lieu, les élastomères thermoplastiques (TPE) où la partie déformable élastiquement forment un réseau entre des régions « dures » peu déformables dont la cohésion est le fruit de liaisons physiques (cristallites ou régions amorphes au-dessus de leur température de transition vitreuse), ensuite les élastomères non thermoplastiques et enfin les résines thermodurcissables.

Le renfort annulaire de siège peut être constitué d'au moins deux couches de constituants différents disposés successivement en alternance. Par disposition en alternance, on définit une disposition successive d'une première puis d'une seconde couche, plusieurs fois.

Le renfort annulaire de siège peut avoir une longueur axiale totale supérieure ou égale à 30% de la largeur du bourrelet du pneumatique, et inférieure à 150% de cette même largeur, et plus préférentiellement comprise entre 40 et 110% de la largeur du bourrelet du pneumatique.

Le renfort annulaire de siège peut avoir une épaisseur radiale moyenne supérieure ou égale à 0,3mm et inférieure ou égale à 20mm en fonction de la dimension et de l'utilisation du pneumatique. Ainsi pour un pneumatique tourisme, l'épaisseur est de préférence comprise entre 0,5 et 10mm.

Le renfort annulaire de siège comprend de préférence au moins un élément choisi parmi un métal, un matériau composite, un thermoplastique, et leur mélange. Cet âme ou ce multicouche est de préférence compris entre deux couches d'une matrice comprenant au choix un élastomère tel que cité ci-dessus, une résine ou leurs mélanges.

Le renfort annulaire de siège est de préférence constitué d'un empilage de différentes couches de composés élastomères de nature chimique identique ou différente.

Lorsqu'il est sous forme d'un empilage de couches, le renfort a de préférence une longueur axiale supérieure à 5mm et inférieure à 25mm, et une épaisseur radiale supérieure ou égale à 0,1mm et inférieure ou égale à 4mm.

Chaque élément unitaire constituant l'empilage du renfort peut avoir une largeur axiale supérieure à 1mm et inférieure à 25mm, et une épaisseur radiale, identique ou différente, supérieure ou égale à 0,1mm et inférieure ou égale à 2mm.

Le renfort annulaire de siège peut encore se présenter sous la forme d'un empilage de fils unitaires entre une couche d'une matrice comprenant au choix un élastomère, un composé thermoplastique, une résine ou leurs mélanges. Les fils unitaires peuvent être des fils classiquement utilisés, tels que textiles (polyester, nylon, PET, aramide, rayonne, fibres naturelles (coton, lin chanvre)), métalliques, composites (carbone, verre-résine) ou les mélanges de ces constituants.

Le renfort annulaire de siège peut encore se présenter sous la forme d'une ou plusieurs nappes, dont les renforts sont disposés avec un angle compris entre 0 et 90° avec la direction circonférentielle du pneumatique.

De préférence, le renfort annulaire peut être disposé radialement à l'extérieur ou radialement à l'intérieur du corps de l'adaptateur, de part et d'autre dudit corps, ou bien encore, entre les nappes d'éléments de renforcement du corps de l'adaptateur.

L'élément de renfort extérieur peut être constitué en métal (acier), nylon, PET, aramide. Il peut comprendre une matrice en résine et/ou fibres de renforcement, telle que rayonne, aramide, PET, nylon, fibre de verre, fibre de carbone, fibre de basalte, poly(éthylène2,6 naphtalate) (PEN), polyvinyl alcool (PVA).

L'armature de renforcement principal dudit corps peut présenter un module supérieur ou égal à 4GPa ; il peut être constitué en métal (acier) en câble textile (rayonne, aramide, PET, nylon, fibre de de verre, fibre de carbone, fibre de basalte, poly(éthylène2,6 naphtalate) (PEN), polyvinyl alcool (PVA).

De préférence, l'adaptateur peut être disposé d'un seul côté de la jante, et préférentiellement du côté extérieur du véhicule. Dans ce cas, la jante possède une forme géométrique dissymétrique de manière à s'adapter à la présence de l'adaptateur présent sur un seul côté.

Lorsque l'ensemble monté comprend deux adaptateurs, ces derniers peuvent être symétriques ou non symétriques. La notion de symétrie ou de dissymétrie de l'adaptateur est définie par la longueur axiale du corps de l'adaptateur. Deux adaptateurs sont dissymétriques lorsque le corps de l'un d'entre eux a une longueur axiale plus grande que celle de l'autre.

De préférence, l'ensemble roulant comprend un premier et un second adaptateur ayant chacun un corps de longueur identique ou différente.

L'invention va maintenant être décrite à l'aide des exemples et des figures qui suivent et qui sont donnés uniquement à titre d'illustration, et dans lesquels :
- la figure 1 représente de manière schématique l'adaptateur selon l'art antérieur,
- la figure 2 représente de manière schématique et en coupe radiale un pneumatique monté sur deux adaptateurs selon l'invention, eux-mêmes encastrés sur la jante de manière démontable ; et
- la figure 3 représente une vue schématique en coupe radiale d'un adaptateur non monté, selon l'invention.

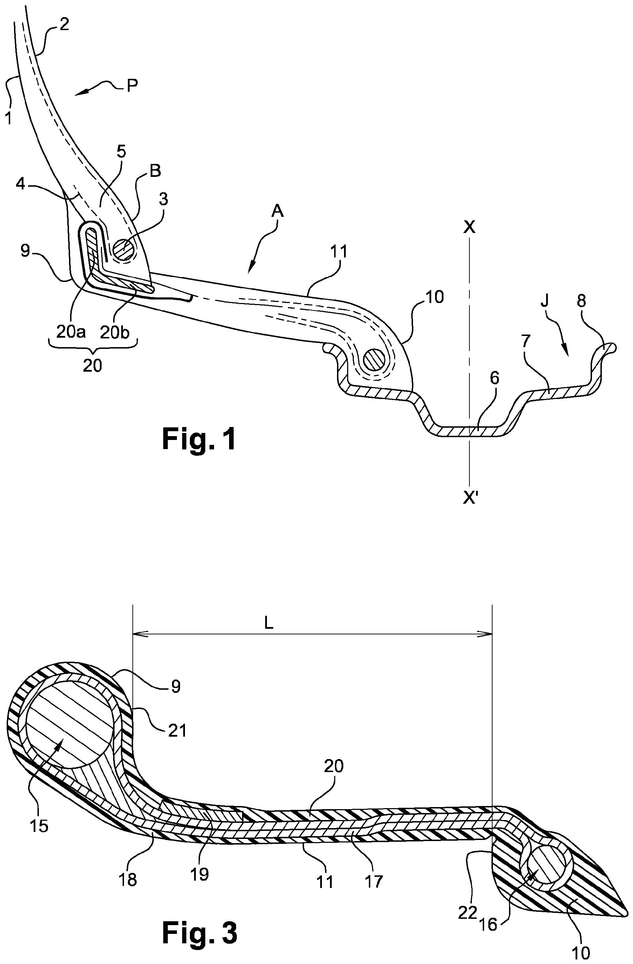

La figure 1, qui représente un adaptateur selon l'art antérieur, comprend un pneumatique P (partiellement représenté), un adaptateur A et une jante J.

Le pneumatique de conception en soi inchangée dans l'invention, est formé d'une bande de roulement renforcée par une armature de sommet réunie à deux bourrelets B de part et d'autre d'un plan équatorial XX' par l'intermédiaire de deux flancs 1. Une armature de carcasse 2 renforçant principalement les flancs 1 est ancrée dans chaque bourrelet B à au moins une tringle, ici de type « tressée » 3 pour former des retournements 4, séparés de la partie principale d'armature de carcasse par des profilés de forme quasi-triangulaire 5.

Il est important de noter que l'invention peut être mise en oeuvre avec de très nombreux types de pneumatiques, qu'ils soient à carcasse radiale ou diagonale, voire même avec des pneumatiques de type à flancs autoporteurs.

La jante J comprend une gorge 6, dite de montage, et réunissant de part et d'autre du plan équatorial, deux sièges de jante 7 axialement prolongés par des crochets de jante 8 dont les bords radialement extérieurs sont recourbés.

L'adaptateur A comprend principalement une extrémité axialement extérieure 9, une extrémité axialement intérieure 10 et un corps 11 connectant ladite extrémité 9 à ladite extrémité 10.

L'extrémité axialement extérieure 9 comprend un élément de renfort extérieur 15 constitué d'une première portion 20a reliée à une seconde portion 20b et formant un angle sensiblement perpendiculaire entre elles. Lors du montage du pneumatique, le siège de bourrelet du bourrelet B s'encastre dans l'espace créée par cet élément de renfort extérieur 15.

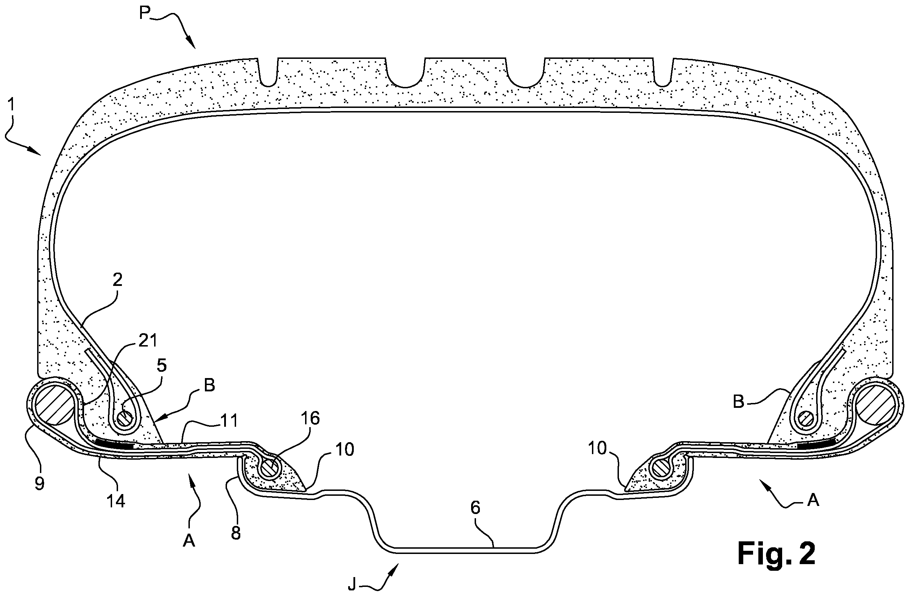

La figure 2 représente un ensemble monté comprenant deux adaptateurs A selon l'invention, reliant les bourrelets B du pneumatique P aux deux crochets de jante 8 de la jante J. Les adaptateurs de cette figure 2 sont démontables par rapport à la jante J et aux bourrelets B du pneumatique.

L'adaptateur A, disposé au niveau de chaque bourrelet B du pneumatique peut être symétrique ou non symétrique. Par symétrie, on définit que la longueur totale du corps 11 est identique sur les deux adaptateurs. Lorsque l'ensemble (pneumatique, jante et adaptateur) est monté, les bourrelets B du pneumatique sont disposés sur le siège d'adaptateur 14 et mis en appui axial contre une face d'appui 21.

La figure 3 représente un adaptateur selon l'invention, non monté sur jante. Cet adaptateur comprend, d'une part, une extrémité axialement extérieur 9 avec un renfort extérieur 15, de forme géométrique sensiblement sphérique, en coupe, constitué en matériau composite tel que du verre-résine, d'autre part, une extrémité axialement intérieur 10 avec un renfort métallique 16, et enfin un corps 11 constitué de deux nappes 17 comprenant des câbles textiles. Les câbles de chaque nappe sont parallèles entre eux. Lesdites nappes 17 sont, d'une part, accolée axialement à l'intérieur et radialement à l'extérieur aux parois du renfort 15, et d'autre part, ancrée dans l'extrémité 10 au renfort métallique 16, tel qu'une tringle formant un retournement à chaque extrémité.

Le corps 11 comprend un siège d'adaptateur 18 sensiblement cylindrique destiné à recevoir un bourrelet du pneumatique (voir figure 2) disposé à l'extrémité axialement extérieure du corps 11.

Le corps 11 comprend également une face d'appui 21 d'adaptateur sensiblement comprise dans un plan perpendiculaire à l'axe de rotation, située sur la face axialement intérieure de l'extrémité axialement extérieure, et destiné à maintenir en place le bourrelet dans son logement. Ce siège d'adaptateur 18 comprend un renfort annulaire de siège 19 ayant un module de compression égal à 100GPa. Selon la représentation de cette figure 3, la totalité du renfort 19 est disposée à la surface radialement extérieure de la surface du corps 11.

Contrairement au dispositif connu (figure 1), le renfort annulaire de siège 19 n'est pas solidaire du renfort extérieur 15. Ces deux renforts 19, 15 sont totalement indépendants l'un de l'autre.

Le renfort 19 est constitué d'un tricouche comprenant des renforts métalliques sous forme de fils, alternés avec un élastomère de type caoutchouc-résine. Le renfort 19 a une épaisseur radiale d'environ 1,5mm et une longueur axiale d'environ 15mm.

La couche d'élastomère du renfort 19 a une épaisseur radiale d'environ 0,3mm et une longueur axiale d'environ 15mm.

Une couche d'élastomère 20 recouvre l'ensemble des éléments constituant l'adaptateur, à savoir le renfort 15, le renfort 16, le corps 11 et, la surface radialement extérieure du renfort 19.

Les exemples qui suivent montrent les résultats obtenus avec l'adaptateur selon l'invention.

### Exemple : Essais sur choc trottoir

Cet essai consiste à faire monter un ensemble monté sur un trottoir selon un angle d'attaque de 30°. Le choix de cet angle est basé sur le fait qu'il constitue une sollicitation très pénalisante pour un pneumatique. L'essai s'effectue avec deux hauteurs de trottoir différentes (90mm et 110mm).

Le test se déroule de la manière suivante. On effectue plusieurs passages de la roue à des vitesses différentes jusqu'à obtenir la crevaison du pneumatique. La vitesse de départ est de 20km/h, puis on incrémente la vitesse de 5km/h à chaque nouveau passage.

On compare un ensemble classique sans adaptateur (témoin 1) à un ensemble muni d'un adaptateur selon le document WO00/78565 (témoin 2), et à un ensemble muni d'un adaptateur selon l'invention (invention). Ces ensembles sont tous de dimension 205/55R16 comprenant une jante 6.5J16. Les résultats sont rassemblés dans le tableau I suivant et sont donnés en pourcentage :

**Tableau I**

| | **Témoin 1** | **Témoin 2** | **Invention** |
|---|---|---|---|
| **Pourcentage de la vitesse de crevaison par rapport au témoin** - **hauteur trottoir 90mm** | 100 | >150 | >150 |
| **Niveau d'effort de portée verticale (Fz) relévée à la vitesse de crevaison** | 100 | 50 | 40 |
| **Etat de l'ensemble monté suite aux chocs** | -crevaison du pneu | -Pneu et roue intacts | Pneu, adaptateur et roue intacts |
| | - roue comprenant des marques | -Adaptateur déformé plastiquement | |

Les résultats supérieurs à 100 montrent une amélioration du comportement face à un choc latéral.

L'essai réalisé sur la hauteur de trottoir de 90mm aboutit à la crevaison du pneumatique témoin à une vitesse de 30km/h, alors que l'ensemble selon l'invention ne subit aucun dommage à cette même vitesse, voire à une vitesse de 50km/h.

L'essai réalisé sur la hauteur de trottoir de 110mm aboutit à la crevaison du pneumatique témoin à une vitesse de 20km/h, alors que l'ensemble selon l'invention ne subit aucun dommage à cette même vitesse, voire à une vitesse de 50km/h.

## Revendications

1. Adaptateur pour ensemble roulant ayant un axe de rotation et comprenant :
- un pneumatique (P) ayant deux bourrelets (B),
- une jante (J),
ledit adaptateur assurant la jonction entre l'un des bourrelets et la jante
ladite jante (J) ayant deux sièges de jante (7),
ledit adaptateur ayant :
- une extrémité axialement intérieure (10) destinée à être monté sur le siège de la jante (7) et comprenant un élément de renfort intérieur (16),
- une extrémité axialement extérieure (9) comprenant un élément de renfort extérieur (15),
- un corps (11) connectant ladite extrémité extérieure (9) avec ladite extrémité intérieure (16) de manière à former une pièce unitaire et comprenant au moins une armature de renforcement principale assurant la liaison entre ledit renfort extérieur (15) et ledit renfort intérieur (16),
- un siège d'adapteur (18) sensiblement cylindrique destiné à recevoir l'un desdits bourrelets (B), ledit siège (18) etant situé a l'extremité axialement extérieure (9) dudit corps (11),
- une face d'appui (21) d'adaptateurs sensiblement, comprise dans un plan perpendiculaire à l'axe de rotation, ladite face d'appui étant située sur la face axialement intérieure de l'extrémité axialement extérieure (9),
le renfort (15) de l'extrémité axialement extérieur (9) étant en totalité à l'extérieur de la face d'appui (21), **caractérisé en ce que** le corps (11) comprend, en regard du siège d'adaptateur (18), un renfort annulaire de siège (19) présentant un module de compression supérieur ou égal à 1GPa.

2. Adaptateur selon la revendication 1, **caractérisé en ce que** le renfort annulaire de siège (19) présente un module de compression supérieur ou égal à 4GPa.

3. Adaptateur selon l'une des revendications 1 ou 2, **caractérisé en ce que** le renfort annulaire de siège (19) présente un module de compression supérieur ou égal à 10GPa

4. Adaptateur selon l'une des revendications précédentes **caractérisé en ce que** le renfort annulaire de siège (19) est constitué d'une âme entourée d'un élastomère.

5. Adaptateur selon la revendication 4, **caractérisé en ce que** l'âme comprend au moins un élément choisi parmi un métal, un matériau composite, un thermoplastique, et leur mélange.

6. Adaptateur selon l'une des revendications 1 à 5, **caractérisé en ce que** le renfort annulaire de siège (19) est constitué d'au moins deux couches de constituants différents disposées successivement en alternance.

7. Adaptateur selon la revendication 5, **caractérisé en ce que** le matériau composite est réalisé à base de fibres de verre noyées dans un matériau résine.

8. Adaptateur selon la revendication 1, **caractérisé en ce que** le renfort annulaire de siège (19) a une longueur axiale supérieure ou égale à 30% de la largeur du bourrelet du pneumatique, et inférieure à 150% de cette même longueur.

9. Adaptateur selon la revendication 1, **caractérisé en ce que** le renfort annulaire de siège (19) a une longueur axiale comprise entre 40 et 110% de la largeur du bourrelet du pneumatique.

10. Adaptateur selon la revendication 1, **caractérisé en ce que** le renfort annulaire de siège (19) a une épaisseur radiale moyenne supérieure ou égale à 0,3mm et inférieure ou égale à 20mm.

11. Ensemble roulant ayant un axe de rotation et comprenant :
- un pneumatique (P) ayant deux bourrelets (B),
- une jante (J),
- un adaptateur selon l'une des revendications précédentes.

12. Ensemble roulant selon la revendication 11, **caractérisé en ce qu'**il comprend un premier et un second adaptateur ayant chacun un corps (11) de longueur identique.

13. Ensemble roulant selon la revendication 11, **caractérisé en ce qu'**il comprend un premier et un second adaptateur ayant chacun un corps (11) de longueur différente.

## Patentansprüche

1. Adapter für eine rollende Baugruppe, die eine Drehachse aufweist und umfasst:
- einen Reifen (P) mit zwei Wülsten (B),
- eine Felge (J),
wobei der Adapter die Verbindung zwischen einem der Wülste und der Felge sicherstellt,
wobei die Felge (J) zwei Felgensitze (7) aufweist,
wobei der Adapter aufweist:
- ein axial inneres Ende (10), das dazu bestimmt ist, auf dem Sitz der Felge (7) angebracht zu werden, und ein inneres Verstärkungselement (16) umfasst,
- ein axial äußeres Ende (9), das ein äußeres Verstärkungselement (15) umfasst,
- einen Körper (11), der das äußere Ende (9) mit dem inneren Ende (16) derart verbindet, dass ein einstückiges Teil gebildet wird, und wenigstens eine Hauptverstärkungsbewehrung umfasst, welche die Verbindung zwischen der äußeren Verstärkung (15) und der inneren Verstärkung (16) sicherstellt,
- einen im Wesentlichen zylindrischen Adaptersitz (18), der dazu bestimmt ist, einen der Wülste (B) aufzunehmen, wobei sich der Sitz (18) am axial äußeren Ende (9) des Körpers (11) befindet,
- eine Stützfläche (21) des Adapters, die im Wesentlichen in einer zur Drehachse senkrechten Ebene liegt, wobei sich die Stützfläche auf der axial inneren Fläche des axial äußeren Endes (9) befindet,
wobei sich die Verstärkung (15) des axial äußeren Endes (9) vollständig außerhalb der Stützfläche (21) befindet,
**dadurch gekennzeichnet, dass** der Körper (11) gegenüber dem Adaptersitz (18) eine ringförmige Sitzverstärkung (19) umfasst, die einen Kompressionsmodul aufweist, der größer oder gleich 1 GPa ist.

2. Adapter nach Anspruch 1, **dadurch gekennzeichnet, dass** die ringförmige Sitzverstärkung (19) einen Kompressionsmodul aufweist, der größer oder gleich 4 GPa ist.

3. Adapter nach einem der Ansprüche 1 oder 2, **dadurch gekennzeichnet, dass** die ringförmige Sitzverstärkung (19) einen Kompressionsmodul aufweist, der größer oder gleich 10 GPa ist.

4. Adapter nach einem der vorhergehenden Ansprüche, **dadurch gekennzeichnet, dass** die ringförmige Sitzverstärkung (19) aus einem Kern besteht, der von einem Elastomer umgeben ist.

5. Adapter nach Anspruch 4, **dadurch gekennzeichnet, dass** der Kern wenigstens ein Element umfasst, das aus einem Metall, einem Verbundmaterial, einem Thermoplast und deren Mischung ausgewählt ist.

6. Adapter nach einem der Ansprüche 1 bis 5, **dadurch gekennzeichnet, dass** die ringförmige Sitzverstärkung (19) aus wenigstens zwei Schichten von unterschiedlichen Bestandteilen besteht, die aufeinander folgend abwechselnd angeordnet sind.

7. Adapter nach Anspruch 5, **dadurch gekennzeichnet, dass** Verbundmaterial auf der Basis von Glasfasern hergestellt ist, die in ein Harzmaterial eingebettet sind.

8. Adapter nach Anspruch 1, **dadurch gekennzeichnet, dass** die ringförmige Sitzverstärkung (19) eine axiale Länge aufweist, die größer oder gleich 30 % der Breite des Wulstes des Reifens und kleiner als 150 % dieser Breite ist.

9. Adapter nach Anspruch 1, **dadurch gekennzeichnet, dass** die ringförmige Sitzverstärkung (19) eine axiale Länge aufweist, die zwischen 40 und 110 % der Breite des Wulstes des Reifens liegt.

10. Adapter nach Anspruch 1, **dadurch gekennzeichnet, dass** die ringförmige Sitzverstärkung (19) eine mittlere radiale Dicke aufweist, die größer oder gleich 0,3 mm und kleiner oder gleich 20 mm ist.

11. Rollende Baugruppe, die eine Drehachse aufweist und umfasst:
- einen Reifen (P) mit zwei Wülsten (B),
- eine Felge (J),
- einen Adapter nach einem der vorhergehenden Ansprüche.

12. Rollende Baugruppe nach Anspruch 11, **dadurch gekennzeichnet, dass** sie einen ersten und einen zweiten Adapter umfasst, welche Körper (11) von identischer Länge aufweisen.

13. Rollende Baugruppe nach Anspruch 11, **dadurch gekennzeichnet, dass** sie einen ersten und einen zweiten Adapter umfasst, welche Körper (11) von unterschiedlicher Länge aufweisen.

## Claims

1. Adapter for a rolling assembly having a rotation axis and comprising:
- a tyre (P) having two beads (B),
- a rim (J),
said adapter providing the connection between one of the beads and the rim,
said rim (J) having two rim seats (7),
said adapter having:
- an axially inner end (10) that is intended to be mounted on the rim seat (7) and comprises an inner reinforcer element (16),
- an axially outer end (9) comprising an outer reinforcer element (15),
- a body (11) that connects said outer end (9) to said inner end (16) so as to form a single piece and comprises at least one main reinforcement that provides the connection between said outer reinforcer (15) and said inner reinforce (16),
- a substantially cylindrical adapter seat (18) intended to receive one of said beads (B), said seat (18) being situated at the axially outer end (9) of said body (11),
- an adapter bearing face (21) substantially contained in a plane perpendicular to the rotation axis, said bearing face being situated on the axially inner face of the axially outer end (9),
the reinforcer (15) of the axially outer end (9) being entirely outside the bearing face (21), **characterized in that** the body (11) comprises, opposite the adapter seat (18), an annular seat reinforcer (19) having a compression modulus greater than or equal to 1 GPa.

2. Adapter according to Claim 1, **characterized in that** the annular seat reinforcer (19) has a compression modulus greater than or equal to 4 GPa.

3. Adapter according to either of Claims 1 and 2, **characterized in that** the annular seat reinforcer (19) has a compression modulus greater than or equal to 10 GPa.

4. Adapter according to one of the preceding claims, **characterized in that** the annular seat reinforcer (19) is made up of a core surrounded by an elastomer.

5. Adapter according to Claim 4, **characterized in that** the core comprises at least one element chosen from a metal, a composite material, a thermoplastic, and a mixture thereof.

6. Adapter according to one of Claims 1 to 5, **characterized in that** the annular seat reinforcer (19) is made up of at least two layers of different constituents disposed successively in alternation.

7. Adapter according to Claim 5, **characterized in that** the composite material is made from glass fibres embedded in a resin material.

8. Adapter according to Claim 1, **characterized in that** the annular seat reinforcer (19) has an axial length greater than or equal to 30% of the width of the bead of the tyre, and less than 150% of this same length.

9. Adapter according to Claim 1, **characterized in that** the annular seat reinforcer (19) has an axial length of between 40 and 110% of the width of the bead of the tyre.

10. Adapter according to Claim 1, **characterized in that** the annular seat reinforcer (19) has a mean radial thickness greater than or equal to 0.3 mm and less than or equal to 20 mm.

11. Rolling assembly having a rotation axis and comprising:
- a tyre (P) having two beads (B),
- a rim (J),
- an adapter according to one of the preceding claims.

12. Rolling assembly according to Claim 11, **characterized in that** it comprises a first and a second adapter that each have a body (11) with an identical length.

13. Rolling assembly according to Claim 11, **characterized in that** it comprises a first and a second adapter that each have a body (11) with a different length.
